# EUROPEAN PATENT APPLICATION

(11) **EP 1 479 329 A1**
(43) Date of publication of application: **24.11.2004**
(21) Application number: 04002818.5
(22) Date of filing: 09.02.2004
(51) Int. Cl.: A47J 27/00

(54) **Triple bottom structure of cooking utensil and method for manufacturing the same**

(30) Priority: 16.05.2003 KR 2003031296
(71) Applicant: Kim, Myung-suk, Seoul 137-060 (KR)
(72) Inventor: Kim, Myung-suk, Seoul 137-060 (KR)
(74) Representative: Kilian, Helmut, Dr.

(57) **Abstract**

Disclosed are a triple bottom structure of a cooking utensil (10), in which a heat transfer plate (40) placed between the main body (20) and a stiffening plate (30) for improving the heat transfer rate is exposed to the outside by through holes (32) formed through the stiffening plate (30), thereby maximizing heat transfer efficiency.

## Description

### BACKGROUND OF THE INVENTION

### Field of the Invention

The present invention relates to a triple bottom structure of a cooking utensil and a method for manufacturing the same, and more particularly to a triple bottom structure of a cooking utensil, in which a heat transfer plate placed between a main body and a stiffening plate for improving the heat transfer rate is exposed to the outside by through holes formed through the stiffening plate so as to maximize heat transfer efficiency, to show the existence of the heat transfer plate and to have an aesthetic appearance, and a method for manufacturing the triple bottom structure.

### Description of the Related Art

Generally, a cooking utensil such as a pan comprises a main body and a stiffening plate, which are made of stainless steel, being rust proof, and a heat transfer plate, which is made of aluminum (Al) and placed between the main body and the stiffening plate for increasing a heat transfer rate by heating it.

That is, using the above-described triple bottom structure, a bottom surface of such a cooking utensil is uniformly heated and the heat transfer rate of the bottom surface of the cooking utensil is improved.

Clad metal refers to a composite plate material obtained by polymerizing two or more metals by cladding, for example a material obtained by cladding stainless steel with aluminum, and is used in cooking utensils, automobile components, highspeed electric train and railroad car components, aircraft materials, sound proofing materials, building materials, etc.

In case the cooking utensils adapt the clad metal, the cooking utensils have advantages such as thermal conductivity and the heat retention properties of aluminum, corrosion resistance of stainless steel and an aesthetic appearance.

However, the conventional cooking utensil has a bottom structure in which the heat transfer plate is not visible to the naked eye, thus causing defective products in a manufacturing process and lowering reliability of the products.

Further, in case the space between the stiffening plate and the heat transfer plate is filled with moisture after a length of time, the heat transfer rate of the cooking utensil rapidly deteriorates.

### SUMMARY OF THE INVENTION

Therefore, the present invention has been made in view of the above problems, and it is an object of the present invention to provide a triple bottom structure of a cooking utensil, in which a heat transfer plate made of a material ofhigh thermal conductivity, such as aluminum, is partially exposed, thereby maximizing a heat transfer rate and providing reliability of the product.

It is another object of the present invention to provide a method for manufacturing a triple bottom structure of a cooking utensil, in which a main body, a heat transfer plate and a stiffening plate are pressed under designated temperature and pressure, so that the heat transfer plate in a soft state is inserted into through holes of the stiffening plate and then exposed to the outside.

In accordance with one aspect of the present invention, the above and other objects can be accomplished by the provision of a triple bottom structure of a cooking utensil, comprising: a main body forming the interior of the cooking utensil for containing food; a stiffening plate attached to the entire bottom surface of the main body so as to extend to an edge of a side surface of the main body, and provided with a plurality of through holes formed therethrough; and a heat transfer plate interposed between a bottom surface of the main body and the bottom surface of the stiffening plate for transferring heat from the outside to the inside of the cooking utensil, wherein the heat transfer plate and the main body are pressed against each other and then attached to each other so that the heat transfer plate is partially inserted into the through holes.

In accordance with another aspect of the present invention, there is provided a method for manufacturing a triple bottom structure of a cooking utensil, comprising the steps of; (a) cutting and processing a main body and a heat transfer plate of the cooking utensil; (b) piercing a stiffening plate of the cooking utensil so that a plurality of through holes are formed in the stiffening plate; (c) sequentially attaching and welding the main body, the heat transfer plate and the stiffening plate; (d) pressing the main body, the heat transfer plate and the stiffening plate at a designated temperature and pressure; and (e) annealing the cooking utensil at room temperature.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is an exploded view of a cooking utensil in accordance with the present invention;
Fig. 2 is a bottom view of the cooking utensil in accordance with the present invention;
Fig. 3 is a longitudinal-sectional view of the cooking utensil in accordance with the present invention;
Fig. 4 is a flow chart of a process for manufacturing the cooking utensil in accordance with the present invention; and
Fig. 5 is a schematic view illustrating a step of pressing the cooking utensil in accordance with the present invention.

### DESCRIPTION OF THE PREFERRED EMBODIMENTS

Now, preferred embodiments of the present invention will be described in detail with reference to the annexed drawings.

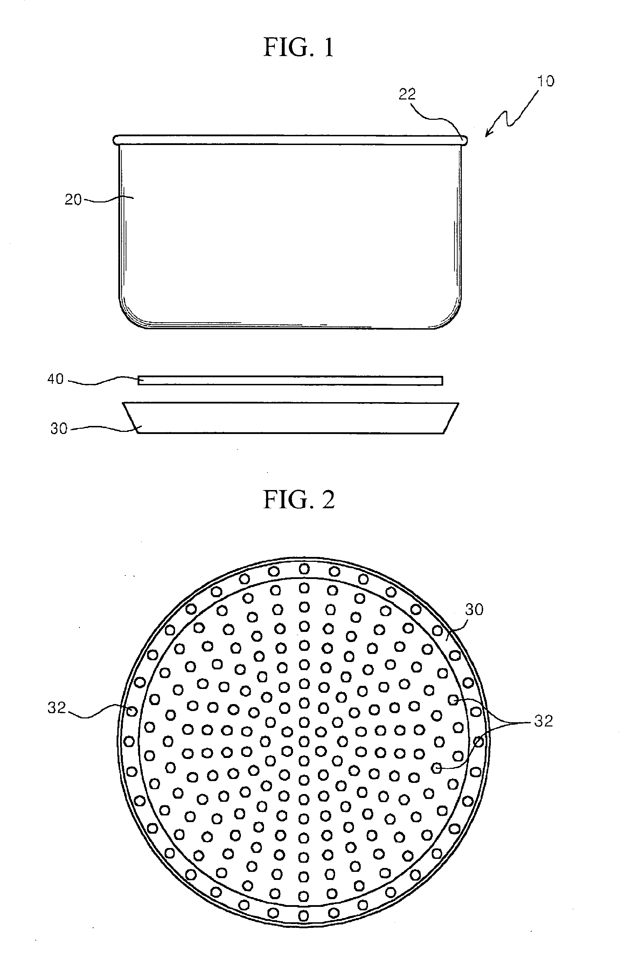

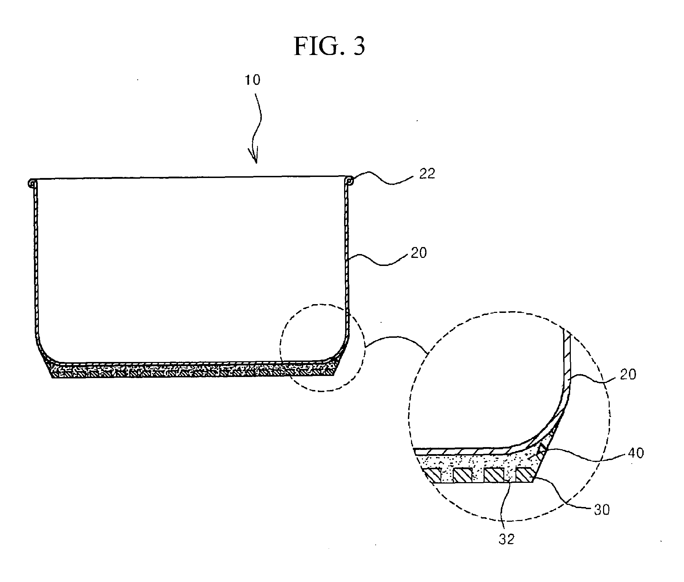

Fig. 1 is an exploded view of a cooking utensil in accordance with the present invention. Fig. 2 is a bottom view of the cooking utensil in accordance with the present invention. Fig. 3 is a longitudinal-sectional view of the cooking utensil in accordance with the present invention.

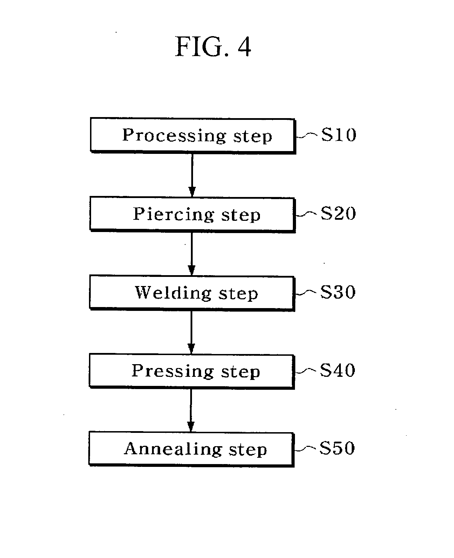

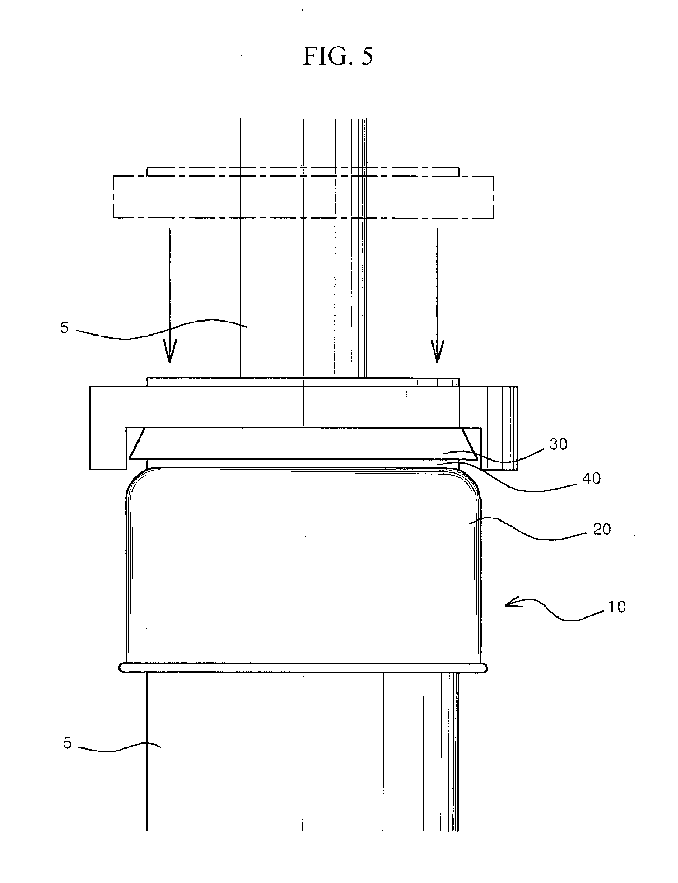

Further, Fig. 4 is a flow chart of a process for manufacturing the cooking utensil in accordance with the present invention. Fig. 5 is a schematic view illustrating a step of pressing the cooking utensil in accordance with the present invention.

As shown in Figs. 1 to 3, a triple bottom structure of the cooking utensil 10 comprises a main body 20 forming the interior of the cooking utensil 10 and containing food, a stiffening plate 30 attached to an entire bottom surface of the main body 20, extended to a part of a side surface of the main body 20, and provided with a plurality of through holes 32, and a heat transfer plate 40 interposed between the bottom surface of the main body 20 and the bottom surface of the stiffening plate 30 for transferring heat from the outside to the inside of the cooking utensil 10. Here, the heat transfer plate 40 and the main body 20 are pressed together and then attached to each other so that the heat transfer plate 40 is partially inserted into the through holes 32 of the stiffening plate 30.

As shown in Fig. 1, the cooking utensil 10 comprises the main body 20 for containing food, the stiffening plate 30 attached to the bottom surface of the main body 20, and the heat transfer plate 40 interposed between the main body 20 and the stiffening plate 30.

The main body 20 includes an opened top surface for introducing food therethrough, and a trimming joint 22 formed along an edge of the opened top surface for protecting the cook's hands.

Preferably, the main body 20 is made of stainless steel.

Further, the stiffening plate 30 is attached to the bottom surface of the main body 20.

Here, the stiffening plate 30 is attached to the bottom surface of the main body 20 by spot welding.

Preferably, as with the main body 20, the stiffening plate 30 is made of stainless steel.

The stiffening plate 30 is fixedly attached to the entire bottom surface of the main body 20 so as to be extended to the part of the side surface of the main body 20.

The heat transfer plate 40 is interposed between the main body 20 and the stiffening plate 30.

The heat transfer plate 40 serves to transfer heat provided through the stiffening plate 30 to the main body 20.

Accordingly, the heat transfer plate 40 is made of a material having good heat conductivity.

Preferably, the heat transfer plate 40 is made of aluminum (Al).

Top and bottom surfaces of the heat transfer plate 40 are connected to the main body 20 and the stiffening plate 30 by spot welding or braze welding.

As shown in Figs. 2 and 3, a plurality of the through holes 32 are formed at uniform intervals through the entire surface of the stiffening plate 30.

The through holes 32 are vertically formed through the surface of the stiffening plate 30 so that opened top end surfaces of the through holes 32 are respectively connected to opened bottom end surfaces of the through holes 32.

The through holes 32 may be formed in various shapes for providing an aesthetical appearance of the cooking utensil 10. In the present invention, the through holes 32 are formed in circular shapes.

The main body 20, the heat transfer plate 40 and the stiffening plate 30 of the cooking utensil 10 are sequentially stacked, and then pressed by designated temperature and pressure. Thereby, the heat transfer plate 40 is softened so that the heat transfer plate 40 in the softened state is inserted into the through holes 32 and then exposed to the outside.

Here, the parts of the heat transfer plate 40 exposed to the outside via the through holes 32 have a level no higher than the height of the bottom surface of the stiffening plate 30, and preferably are at the same level as the bottom surface of the stiffening plate 30.

Further, the edge of the stiffening plate 30 is extended to the edge of the side surface of the main body 20.

As shown in Figs. 4 and 5, a method for manufacturing the triple bottom structure of the cooking utensil 10 of the present invention comprises a processing step (S10) of cutting and processing the main body 20 and the heat transfer plate 40 of the cooking utensil 10, a piercing step (S20) of piercing the stiffening plate 30 of the cooking utensil 10 so that a plurality of the through holes 32 are formed in the stiffening plate 30, a welding step (S30) of sequentially attaching and welding the main body 20, the heat transfer plate 40 and the stiffening plate 30, a pressing step (S40) of pressing the main body 20, the heat transfer plate 40 and the stiffening plate 30 under designated temperature and pressure, and an annealing step (S50) of annealing the cooking utensil 10 at room temperature.

As shown in Fig. 4, in the processing step (S10), an aluminum plate for forming the main body 20 having a designated thickness is cut at a designated depth. The cut aluminum plate may have various widths according to the purpose of the cooking utensil 10.

Here, the processing step (S10) includes a trimming step of trimming the cut main body 20 so that the trimming joint 22 is formed along the edge of the cut main body 20, and a forming step of making a shape of the cooking utensil 10 to be formed by the designated bending strength and pressure.

The processing step (S10) further includes a washing step for removing impurities from the surface of the main body 20 after the forming step.

The processing step (S10) further includes a cutting step of cutting the heat transfer plate 40 to be welded to the bottom surface of the main body 20.

In the piercing step (S20), the stiffening plate 30, which will be welded to the bottom surface of the main body, is formed.

That is, in the piercing step (S20), the stiffening plate 30 is cut at a designated size, and then the edge of the stiffening plate 30 is bent upward so that the stiffening plate 30 is welded to the bottom surface of the main body 20.

Thereafter, a plurality of the through holes 32 are vertically formed through the stiffening plate 30.

Here, the through holes 32 have a uniform size, so that the through holes 32 are completely sealed with the heat transfer plate 40 softened when the main body 20, the heat transfer plate 40 and the stiffening plate 30 are pressed under a designated temperature and pressure.

In the welding step (S30), the heat transfer plate 40 and the stiffening plate 30 are sequentially located under the bottom surface of the main body 20, and then tack-welded.

Here, the tack welding is partially performed by spot welding, etc., in the range that the main body 20, the heat transfer plate 40 and the stiffening plate 30 are not separated.

In the pressing step (S40), the main body 20, the heat transfer plate 40 and the stiffening plate 30, which are welded in the welding step (S30), are preheated.

Here, the cooking utensil 10 is preheated at a temperature of 400°C to 500°C for approximately 15 to 25 minutes so that the heat transfer plate 40 is softened.

In case that the cooking utensil 10 is preheated at a temperature of more than 500°C, various problems occur. That is, air bubbles form on the surfaces of the main body 20 and the stiffening plate 30, the main body 20 and the stiffening plate 30 constrict, and the joint strength among the main body 20, the heat transfer plate 40 and the stiffening plate 30 is lowered.

On the other hand, in case that the cooking utensil 10 is preheated at a temperature of less than 400°C, brittleness in the cooking utensil 10 is increased, thus causing cracks in the cooking utensil 10 in processing.

As shown in Fig. 5, in the pressing step (S40), after the cooking utensil 10 is preheated, the main body 20, the heat transfer plate 40 and the stiffening plate 30 are sequentially stacked and then pressed at a pressure of 1,000 ton/cm² to 1,300 ton/cm².

Here, the pressing of the cooking utensil 10 is performed at super high pressure using a friction press 5.

The main body 20, the heat transfer plate 40 and the stiffening plate 30, which are sequentially stacked and then preheated, are pressed under a fluid and softened state, thus being integrated into the cooking utensil 10 and improving efficiency in the attachment.

Here, the heat transfer plate 40 is softened and then partially inserted into the through holes 32 of the stiffening plate 30.

The heat transfer plate 40 located in the stiffening plate 30 is softened and expanded to the edge of the side surface of the main body 20. Then, the expanded portion of the heat transfer plate 40 is partially inserted into the through holes 32 of the stiffening plate 30 corresponding to the edge of the side surface of the main body 20.

After the pressing step (S40), the annealing step (S50) is performed.

In the annealing step (S50), the cooking utensil 10 heated by designated temperature and pressure is annealed. Through the annealing step (S50), deformation of the cooking utensil 10 is minimized, and the stiffening plate 30 having a high heat expansion rate is contracted more highly than the heat transfer plate 40 having a low heat expansion rate, thereby allowing the parts of the heat transfer plate 40 to be contracted, not to be separated from the through holes 32 but to be fixed in the through holes 32.

Then, in the annealing step (S50), unnecessary tips generated by the pressing step (S40) are cut and ground by a grinding machine (not shown).

Thereafter, the top surface of the main body 20 and the bottom surface of the stiffening plate 30 are anodized.

Anodizing is a plating method in which the surfaces of the main body 20 and the stiffening plate 30 are anodized so that a film is formed on the surfaces, thereby forming various colors on the surfaces of the cooking utensil 10 and improving hardness, abrasion resistance and corrosion resistance of the cooking utensil 10.

The cooking utensil 10 may be formed into a cooking utensil for an induction range, obtained by inserting a magnetic metal (not shown) into parts of the inside or the entire inside of the heat transfer plate 40.

The insertion of the metal plate into the bottom surface of the cooking utensil 10 increases lines of magnetic force generated by the induction range, thereby allowing the cooking utensil 10 to efficiently use energy.

As apparent from the above description, the present invention provides a triple bottom structure of a cooking utensil, in which a heat transfer plate located in a stiffening plate attached to the bottom surface of a main body is partially exposed to the outside by through holes formed through the stiffening plate, thereby maximizing the heat transfer rate, providing reliability, and having an aesthetic appearance.

Further, since the stiffening plate is extended and attached up to the edge of the side surface of the main body, it is possible to prevent separation between the main body and the stiffening plate due to rapid variation in temperature between the main body and the stiffening plate.

Moreover, the cooking utensil of the present invention is used for multi-purposes including a use for an induction range.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A triple bottom structure of a cooking utensil, comprising:
a main body forming the interior of the cooking utensil for containing food;
a stiffening plate attached to an entire bottom surface of the main body so as to be extended to the edge of a side surface of the main body, and provided with a plurality of through holes formed therethrough; and
a heat transfer plate interposed between a bottom surface of the main body and the bottom surface of the stiffening plate for transferring heat from the outside to the inside of the cooking utensil,
wherein the heat transfer plate and the main body are pressed against each other and then attached to each other so that the heat transfer plate is partially inserted into the through holes.

2. The triple bottom structure as set forth in claim 1, wherein the parts of the heat transfer plate exposed to the outside via the through holes are at the same level as the bottom surface of the stiffening plate.

3. A method for manufacturing a triple bottom structure of a cooking utensil, comprising the steps of;
(a) cutting and processing a main body and a heat transfer plate of the cooking utensil;
(b) piercing a stiffening plate of the cooking utensil so that a plurality of through holes are formed through the stiffening plate;
(c) sequentially attaching and welding the main body, the heat transfer plate and the stiffening plate;
(d) pressing the main body, the heat transfer plate and the stiffening plate under designated temperature and pressure; and
(e) annealing the cooking utensil at room temperature.

4. The method as set forth in claim 3,
wherein in the step (d) the heat transfer plate is softened and inserted into the through holes of the stiffening plate.

5. The method as set forth in claim 3,
wherein in the step (d) the main body, the heat transfer plate and the stiffening plate are heated to a temperature range of 400°C to 500°C, and pressed at a pressure of 1,000 ton/cm² to 1,300 ton/cm².
